# EUROPÄISCHE PATENTSCHRIFT

(11) **EP 2 391 528 B1**
(45) Veröffentlichungstag und Bekanntmachung des Hinweises auf die Patenterteilung: **29.05.2013**
(21) Anmeldenummer: 09774675.4
(22) Anmeldetag: 14.12.2009
(51) Int. Cl.: B60S 1/38

(54) **ANSCHLUSSELEMENT ZUM GELENKIGEN VERBINDEN EINES WISCHBLATTS MIT EINEM WISCHARM UND WISCHBLATT MIT EINEM SOLCHEN ANSCHLUSSELEMENT**
CONNECTING ELEMENT FOR THE ARTICULATED CONNECTION OF A WIPER BLADE TO A WIPER ARM AND WIPER BLADE WITH SUCH CONNECTING ELEMENT
ELÉMENT DE RACCORDEMENT PERMETTANT DE RELIER DE MANIÈRE ARTICULÉE UNE RACLETTE D'ESSUIE-GLACE À UN BRAS D'ESSUIE-GLACE ET RACLETTE D'ESSUIE-GLACE AVEC UN TEL ELÉMENT DE RACCORDEMENT

(30) Priorität: 11.05.2009 DE 102009002997; 28.01.2009 DE 102009000455
(43) Veröffentlichungstag der Anmeldung: 07.12.2011
(73) Patentinhaber: Robert Bosch GmbH, 70442 Stuttgart (DE)
(72) Erfinder: OP'T ROODT, Inigo, B-3500 Hasselt (BE); AZNAG, Mohamed, B-3271 Scherpenheuvel-Zichem (BE); BEELEN, Hans, B-3540 Herk de Stad (BE)
(86) Internationale Anmeldenummer: PCT/EP2009/067095
(87) Internationale Veröffentlichungsnummer: WO 2010/086064

(56) Entgegenhaltungen:
- DE-A1-102005 062 463
- DE-A1-102006 031 514

## Beschreibung

### Stand der Technik

Die Erfindung geht von einem Anschlusselement zum gelenkigen Verbinden eines Wischblatts mit einem Wischarm nach dem Oberbegriff des Anspruchs 1 aus, und von einem Wischblatt mit solchen Anschlusselement.

Aus der DE 10 2006 031 514 A1 ist ein Wischblatt für Scheiben von Kraftfahrzeugen bekannt, das im mittleren Bereich ein Anschlusselement zum gelenkigen Verbinden mit einem Wischarm aufweist. Das Anschlusselement umfasst ein Grundelement, das aus zwei Klauenelementen zusammengesetzt ist, die einander zugewandte offene Längsnuten aufweisen. Mit diesen sitzen sie auf als Tragelement dienenden Federschienen, die in seitlichen Längsnuten einer Wischleiste teilweise eingebettet sind und zumindest im Bereich des Anschlusselements ein Stück weit seitlich aus den Längsnuten vorstehen. Die Längsnuten des Grundelements werden nach unten durch einen unteren Schenkel und nach oben durch einen oberen Schenkel begrenzt. An dem oberen Schenkel ist in einem Endbereich ein Vorsprung und im anderen Endbereich eine Aussparung angeordnet, die jeweils zum gegenüberliegenden Klauenelement gerichtet sind. Der Vorsprung des einen Klauenelements passt in die Aussparung des anderen Klauenelements und umgekehrt. In montiertem Zustand fixieren die Vorsprünge in den Aussparungen die Klauenelemente in Längsrichtung zueinander und definieren den Abstand der Längsnuten quer zum Wischblatt. Auf einer Seite eines jeden Vorsprungs bzw. einer jeden Aussparung befinden sich jeweils zwei zur Längsrichtung geneigt verlaufende Anlageflächen, wobei die Anlageflächen an dem Vorsprung eine konvexe Dachfläche bilden, die in eine konkave Dachfläche passt, die von den Anlageflächen an den Aussparungen gebildet wird. Somit sind die Klauenelemente in Richtung der Hochachse verriegelt.

Auf den den Anlageflächen gegenüberliegenden Seiten der Aussparung kann ein Rasthaken vorgesehen sein, der bei der Montage in eine Rastvertiefung an dem Vorsprung des jeweils anderen Klauenelements einrastet. Die Vorsprünge und die zugeordneten Aussparungen mit den zugehörigen Anlageflächen und Rasthaken bilden einen Führungsblock, der in eine Aussparung in einem Boden einer Blechkralle eingreift. Die Blechkralle, die ein Adapterteil bildet, umfasst die Klauenelemente von außen mit Füßen, die vom Boden aus abgewinkelt sind. Zu den Enden der Blechkralle sind an den Füßen längs gerichtete Laschen angeformt, die bei der Montage in entsprechende Nischen des Grundelements umgebogen werden. Zwischen den Füßen sind vom Boden aus in entgegengesetzter Richtung Seitenwände um etwa 90 Grad umgebogen. Die Seitenwände tragen als Gelenkteil einen Lagerstift, der mit den Seitenwänden vernietet ist.

### Offenbarung der Erfindung

Nach der Erfindung haben die Klauenelemente L-förmige Querschnittprofile, von denen die einen Schenkel nach innen gerichtet sind und das Tragelement untergreifen, während die anderen Schenkel Seitenwände bilden, die an ihren dem Adapterteil zugewandten Rändern mit dem Adapterteil durch eine Nut-Federverbindung verbunden und durch Klippverbindungen gesichert sind.

Die Klauenelemente und das Adapterteil werden zweckmäßigerweise im Spritzgießverfahren aus einem geeigneten Kunststoff hergestellt. Somit besteht das Anschlusselement aus wenigen einfach und kostengünstig herzustellenden Teilen, die leicht zu montieren sind, indem sie ineinander gefügt und miteinander verklippst werden. Dadurch erhalten sie einen festen Sitz auf dem Tragelement. Dieses kann aus einer einzigen, flachen und vorgebogenen oder aus mehreren parallel verlaufenden Federschienen bestehen. Besonders geeignet ist das Anschlusselement aber für Wischblätter mit einer einzigen Federschiene als Tragelement, die in einem Längskanal einer Kopfleiste einer Wischleiste untergebracht ist.

Gemäß einer Ausgestaltung der Erfindung besitzt die Seitenwand eines jeden Klauenelements an seinen dem Adapterteil zugewandten Stirnflächen eine im Wesentlichen in Längsrichtung verlaufende Nut, in die ein Federteil des Adapterteils passt. Grundsätzlich ist es auch möglich, dass das Federteil am Klauenelement und die Nut am Adapterteil angeordnet sind. Die Nut- und Federverbindung gewährt eine große Stabilität und sichere Verbindung quer zum Wischblatt, wobei die Außenflächen der Seitenwände der Klauenelemente und der Seitenwände des Adapterteils bündig aneinander stoßen, sodass sich ein ansprechendes kompaktes Design ergibt, ohne dass eine zusätzliche Abdeckkappe erforderlich ist.

Vorteilhafterweise besitzt das Adapterteil in seinen Seitenwände Aussparungen, in die im Bereich eines Lagerelements Vorsprünge des Adapterteils ragen, die in entsprechende Aussparungen der Klauenelemente passen. Somit sind die Klauenelemente auch in Längsrichtung relativ zum Adapterteil fixiert. In vorteilhafter Weise sind an den vorderen und hinteren Stirnkanten der Seitenwände der Klauenelemente im unteren Bereich Rastvertiefungen vorgesehen, in die entsprechende Rasthaken des Adapterteils einrasten. Somit werden die Klauenelemente in einer Hochachse am Adapterteil durch eine einfache Klippverbindung gesichert. Bei der Demontage können die Rasthaken zurückgedrückt werden, sodass die Klauenelemente vom Adapterteil gelöst werden. Im montierten Zustand ist das Tragelement zwischen dem Adapterteil und den Klauenelementen eingeklemmt. Dadurch wird eine einfache Positionierung in Längsrichtung des Wischblatts erreicht, insbesondere wenn das Tragelement von der gummielastischen Wischleiste umhüllt ist. Im Übrigen können zusätzliche Fixierungsmittel vorgesehen werden, die die Lage des Anschlusselements in Längsrichtung des Wischblatts bestimmen.

Nach einer weiteren Ausgestaltung der Erfindung ist das Adapterteil als Kappe ausgebildet, die mit ihren Seitenwänden die Seitenwände der Klauenelemente außen überdeckt. Dabei passen Federteile der Klauenelemente an den dem Adapterteil zugewandten Stirnflächen der Seitenwände in innen liegende Nuten des Adapterteils. Auch hierbei kann die Anordnung der Nuten- und Federteile umgekehrt sein, sodass Federteile an den Innenwänden des Adapterteils in Nuten der Klauenelemente eingreifen. In montiertem Zustand werden die Klauenelemente von dem Adapterteil von oben und von den Seiten völlig überdeckt, wodurch sich eine strömungsgünstige und wenig schmutzanfällige Konzeption ergibt. Ein solches Anschlusselement eignet sich besonders für Wischblätter mit einem Spoiler, da das Adapterteil an seinen Stirnseiten mit Anschlussprofilen die angrenzenden Spoilerteile ein Stück weit überlappen kann.

Zur Fixierung des Adapterteils in Richtung der Hochachse besitzen die Klauenelemente in Längsrichtung zu beiden Seiten ihrer Seitenwände Verlängerungen, die an ihrer unterer Kante Aussparungen aufweisen, in die Rasthaken einrasten, die im Inneren am Adapterteil vorgesehen sind. Durch die Seitenwände des Adapterteils wird somit die Klippverbindung in Form der Rasthaken und Aussparungen überdeckt, sodass die Klippverbindung vor äußeren Einflüssen geschützt ist und sich ein geschlossenes, ansprechendes Design ergibt. Dabei ist es zweckmäßig, dass die Verlängerungen gegenüber den Außenseiten der Seitenwände nach innen zurückspringen.

Gemäß einer weiteren Ausgestaltung der Erfindung wird vorgeschlagen, dass die Schenkel der Klauenelemente an ihren Innenseiten Nischen aufweisen, in die eine Klammer eingreift, die das Tragelement fest umfasst. Die Klammer, die zweckmäßigerweise aus Metall gefertigt ist, gewährt über die gesamte Betriebsdauer einen sicheren Sitz und eine eindeutige Fixierung des Anschlusselements in Bezug auf die Längsrichtung des Wischblatts.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht einer montierten erfindungsgemäßen Anschlussvorrichtung,
- Fig. 2: einen perspektivischen Querschnitt entsprechend der Ebene II in Fig. 1,
- Fig. 3: einen perspektivischen Querschnitt entsprechend der Ebene III in Fig. 1,
- Fig. 4: eine perspektivische Ansicht eines Adapterteils von unten,
- Fig. 5: eine perspektivische Ansicht eines Klauenelements,
- Fig. 6: eine perspektivische Darstellung einer Varianten nach Fig. 1 während der Montage,
- Fig. 7: einen Schnitt entsprechend der Linie VII-VII in Fig. 6,
- Fig. 8: eine Variante zu Fig. 5,
- Fig. 9: eine Variante zu Fig. 4,
- Fig. 10: eine Variante zu Fig. 6 während der Montage und
- Fig. 11: eine Variante zu Fig. 6 in halb montiertem Zustand,
- Fig. 12: eine Variante zu Fig. 2,
- Fig. 13: eine Wischleiste nach Fig. 12 mit einem Klauenelement,
- Fig. 14: den oberen Teil eines Querschnitts XIV nach Fig. 13 und
- Fig. 15: den unteren Teil des Querschnitts XIV nach Fig. 13.

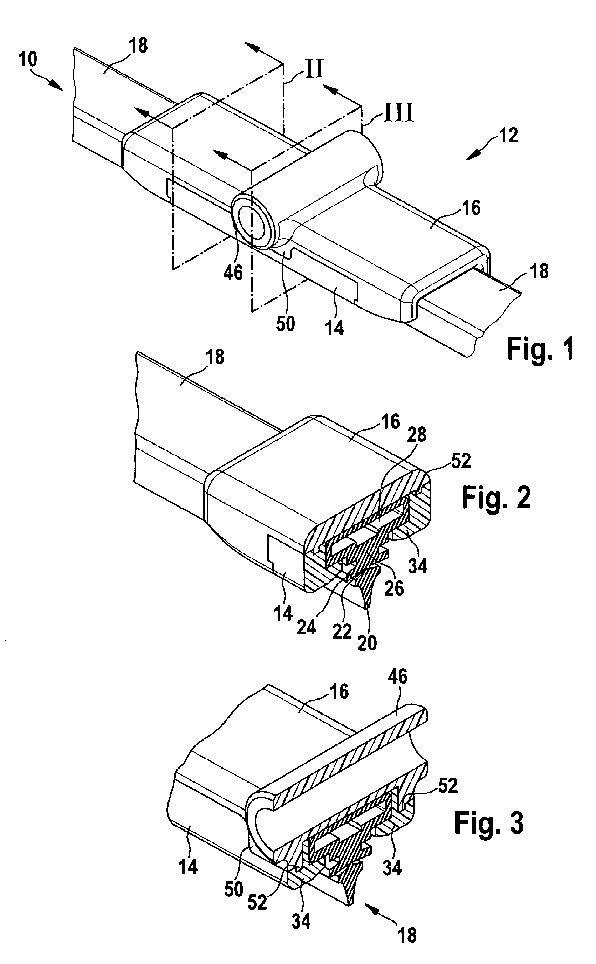

In Fig. 1 ist ein Wischblatt 10 ausschnittweise perspektivisch dargestellt, soweit es zum Verständnis der Erfindung notwendig ist. Etwa im mittleren Bereich des Wischblatts 10 befindet sich ein Anschlusselement 12, das aus einem Adapterteil 16 und zwei seitlichen Klauenelementen 14 zusammengesetzt ist. Das Anschlusselement 12 sitzt auf einer Wischleiste 18. Diese weist in ihrer Kopfleiste 26 einen Längskanal 28 auf, in dem ein Tragelement 30 in Form einer flachen, in Richtung einer Wischlippe 20 der Wischleiste 18 vorgebogenen Federschiene untergebracht ist. Nach der Montage umfasst das Anschlusselement 12 den Längskanal 28 und das Tragelement 30 mit einem festen Sitz.

Die Wischlippe 20 hat einen keilförmigen Querschnitt und ist an ihrer breiteren Seite über einen Kippsteg 22 mit der Kopfleiste 26 verbunden. Sie gleitet bei einer Wischbewegung in einer gekippten Stellung über eine Fahrzeugscheibe, wobei sich eine ihrer Schultern an einer Stützleiste 24 der Kopfleiste 26 abstützt. Die Seite des Wischblatts 10, an der sich die Wischlippe 20 befindet, wird in der vorliegenden Beschreibung mit unten bezeichnet, während die entgegengesetzte Seite mit oben benannt ist.

Das Adapterteil 16, das zweckmäßigerweise aus einem geeigneten Kunststoff in einem Spritzgussverfahren hergestellt ist, übergreift mit einer Deckwand 42 die Kopfleiste 26 und das Tragelement 30 sowie die dem Adapterteil 16 zugewandten Stirnkanten der Klauenelemente 14. An der Deckwand 42 ist ein Lagerelement 46 in Form einer Nabe angeformt. Das Lagerelement 46 kann jedoch bei Bedarf auch ein Gelenkbolzen oder Gelenkzapfen sein. Außerdem besitzt das Adapterteil 16 an seinen Längsseiten nach unten weisende Seitenwände 44 mit einer nach unten offenen Aussparung 48. In diese ragt ein Vorsprung 50, der ein Teil der Seitenwand 44 bildet und an dem Lagerelement 46 angeformt ist.

Das Klauenelement 14 weist ein im Querschnitt im Wesentlichen L-förmiges Profil auf, dessen einer Schenkel 34 nach innen gewandt ist, und den Längskanal 28 und das Tragelement 30 untergreift, während der andere Schenkel 32 eine Seitenwand bildet, die mit ihrer inneren Seite an der äußeren Längsseite des Längskanals 28 anliegt. In der dem Adapterteil 16 zugewandten Stirnseite der Seitenwand 32 ist eine Nut 36 eingelassen, in die an den Seitenwänden 44 des Adapterteils 16 vorgesehene Federteile 52 eingreifen, wodurch eine Nut-Federverbindung entsteht. Beim Zusammensetzen des Adapterteils 16 mit den Klauenelementen 14 gleiten die Federteile 52 in die Nut 36. Gleichzeitig greift der Vorsprung 50 des Adapterteils 16 in eine entsprechende Aussparung 38 an der äußeren Seite der Seitenwand 32, sodass das Adapterteil 16 in Längsrichtung gegenüber den Klauenelementen 14 gesichert ist. Ferner stützt der Vorsprung 50 das zugehörige Klauenelement 14 zusätzlich zu den Federteilen 52 nach außen ab. Zur Sicherung um eine Hochachse besitzen die Klauenelemente 14 an ihren Enden im unteren Bereich Rastvertiefungen 40, in die Rasthaken 54 einrasten. Die Rasthaken 54 sind zu beiden Seiten der Federteile 52 und dem unteren Bereich der Aussparung 48 an den in Längsrichtung äußeren Begrenzungen der Aussparung 48 angeordnet. Im montierten Zustand ist der Längskanal 28 mit dem Tragelement 30 zwischen dem Schenkel 34 und der Deckwand 42 des Adapterteils 16 eingeklemmt, sodass sich eine feste Verbindung zwischen dem Anschlusselement 12 und der Wischleiste 18 ergibt. Dabei schließen die äußeren Seiten der Klauenelemente 14 mit den äußeren Seiten 44 des Adapterteils 16 bündig ab.

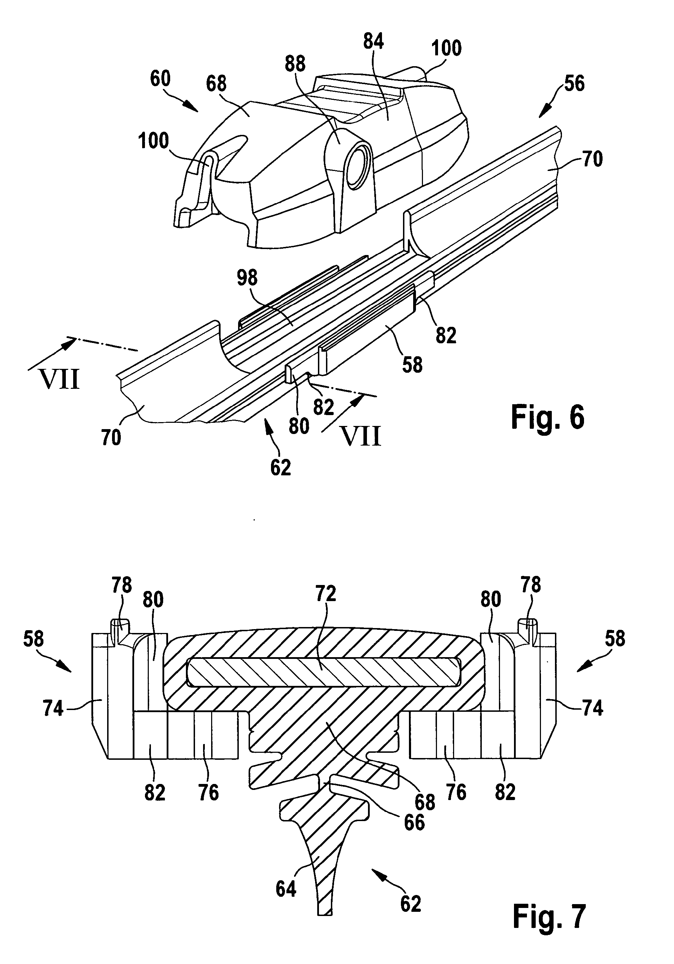

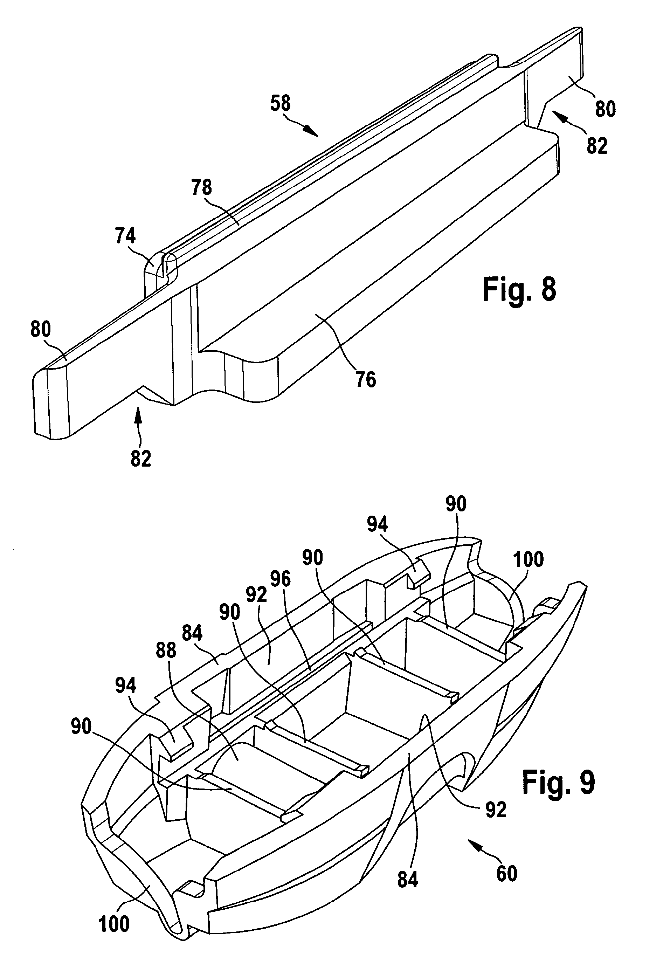

Die Ausführungsbeispiele nach Fig. 6 bis Fig. 9 und Fig. 10 bis Fig. 11 zeigen ein gleiches Konzept für ein Wischblatt 56 mit einer Wischleiste 62, deren Wischlippe 64 über einen Kippsteg 66 mit einer Kopfleiste 68 verbunden ist. In der Kopfleiste 68 ist in einem Längskanal ein Tragelement 72 in Form einer flachen, vorgebogenen Federschiene eingesetzt. An der Kopfleiste 68 ist an der der Wischlippe 64 abgewandten Seite ein Spoiler 70 angeformt. Im mittleren Bereich des Wischblatts 56 ist in dem Spoiler 70 ein Fenster 98 angeordnet, in dem das Anschlusselement 12 Platz findet, das sich in diesem Falle aus Klauenelementen 58 und einem Adapterteil 60 zusammensetzt.

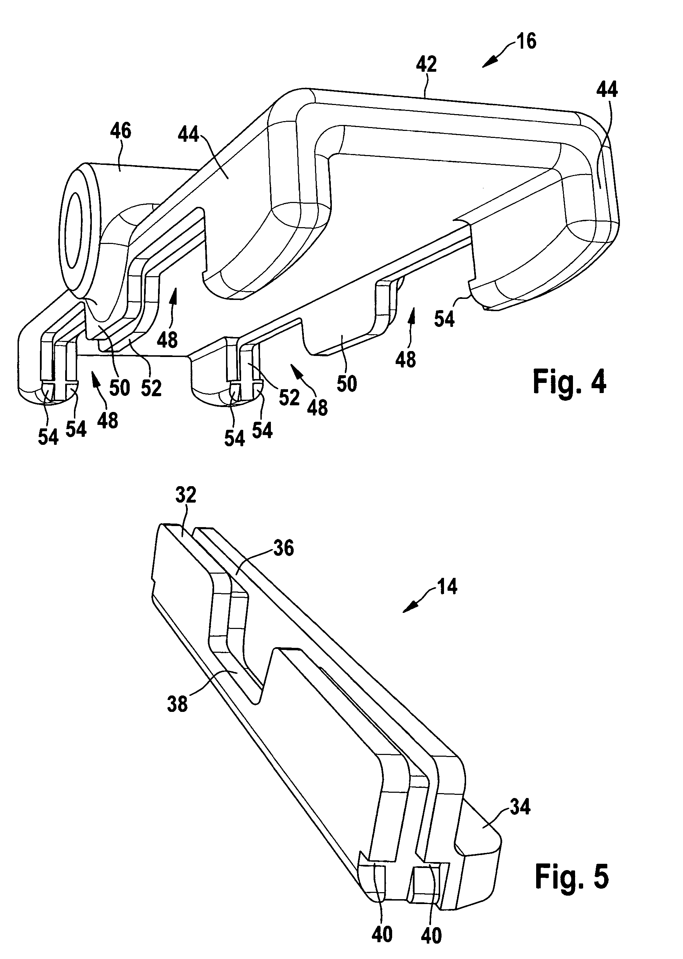

Das Anschlusselement 12 in den Ausführungen nach Fig. 6 bis Fig. 11 unterscheidet sich von dem Anschlusselement nach den Fig. 1 bis Fig. 5 im Wesentlichen durch das Adapterteil 60, das als Kappe ausgebildet ist. Es besitzt eine Deckwand 86, die die Kopfleiste 68 mit dem Tragelement 72 und zwei seitliche Klauenelemente 58 überbrückt. An die Deckwand 86 schließen sich Seitenwände 84 an. Diese überdecken die Klauenelemente 58 seitlich, sodass diese vor Umwelteinflüssen geschützt sind. An den Stirnseiten besitzt das Adapterteil 60 Anschlussprofile 100, die dem Querschnittsprofil des Spoilers 70 angepasst sind und dieses in Längsrichtung ein Stück weit überlappen. Ferner besitzt das Adapterteil 60 ein Lagerelement 88 in Form einer Nabe. Es können jedoch auch andere Lagerelemente z.B. Lagerbolzen oder Lagerzapfen vorgesehen werden.

Die Klauenelemente 58 haben ein L-förmiges Querschnittprofil, wobei die nach innen gerichteten Schenkel 76 das Tragelement 72 in dem Längskanal untergreifen, während der andere Schenkel jeweils eine Seitenwand 74 bildet, die mit ihrer Innenseite an der Außenseite der Kopfleiste 68 im Bereich des Tragelements 72 anliegt. An der dem Adapterteil 60 zugewandten Stirnkante der Seitenwand 74 besitzen die Seitenwände 74 Federteile 78, die in Nuten 96 im Inneren des Adapterteils 60 eingreifen und so eine Nut- und Federverbindung herstellen. Grundsätzlich ist es auch möglich, dass die Federteile 78 an dem Adapterteil 60 vorgesehen werden, während die Nuten, wie beim Ausführungsbeispiel nach Fig. 1 bis Fig. 5 am Klauenelement 58 vorgesehen werden.

Zur Fixierung des Adapterteils 60 in Richtung einer Hochachse besitzen die Seitenwände 74 der Klauenelemente 58 Verlängerungen 80, die in ihrem unteren Bereich Aussparungen 82 aufweisen. In diese greifen bei der Montage Rasthaken 94 des Adapterteils 60. Durch die so gebildete Klippverbindung wird das Adapterteil 60 an den Klauenelementen 58 und damit an dem Tragelement 72 fixiert. Zur Querversteifung und zur Abstützung gegenüber der Kopfleiste 68 mit dem Tragelement 72 besitzt das Adapterteil 60 Querwände 90.

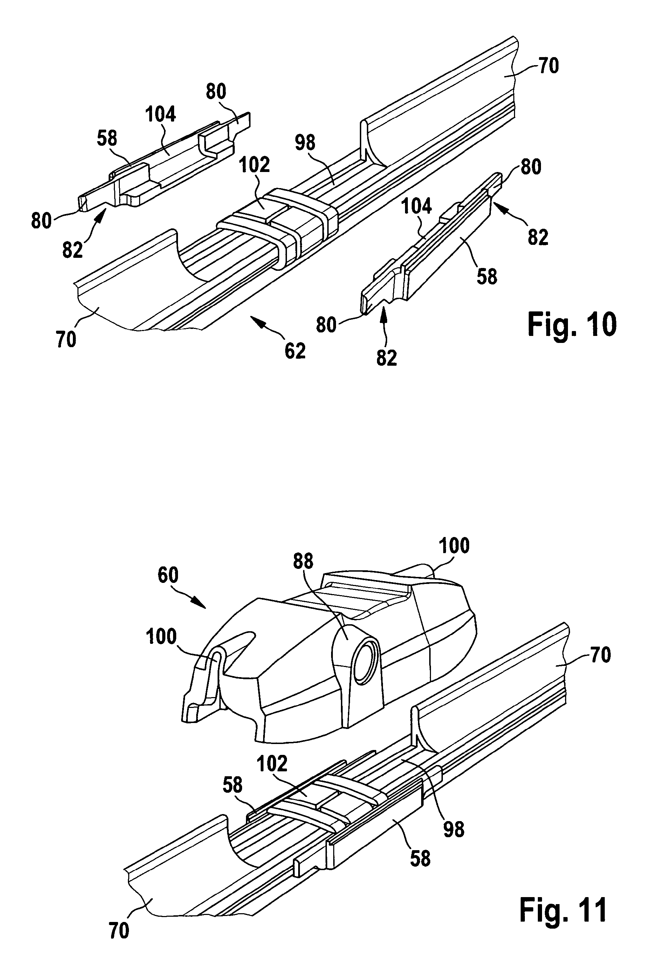

Die Ausführung nach Fig. 10 und 11 unterscheidet sich von der Ausführung nach Fig. 6 bis 9 im Wesentlichen durch eine Klammer 102, die auf die Kopfleiste 68 und das Tragelement 72 festgeklemmt wird und zweckmäßigerweise aus Metall besteht. Durch die Klammer 102, die in Nischen 104 der Klauenelemente 58 eingreift, erreicht man eine zusätzliche Fixierung des Anschlusselements 12 in Längsrichtung. Gleichzeitig ist in dem Adapterteil 60 eine Ausbuchtung 92 für die Klammer 102 vorgesehen.

Zwischen den einzelnen Ausführungen können einzelne Konstruktionselemente ohne weiteres ausgetauscht werden. So könnte beispielsweise die Klippverbindung 40, 54 bei der Ausführung nach Fig. 1 bis 5 mit der Klippverbindung 82, 94 vertauscht werden, indem die Adapterteile 16 bzw. 60 entsprechend angepasst werden. Außerdem kann die Klammer 102 auch bei einer Ausführung nach Fig. 1 bis Fig. 5 verwendet werden, wenn die Klauenelemente 14 und das Adapterteil 16 entsprechende Nischen und Ausbuchtungen erhalten.

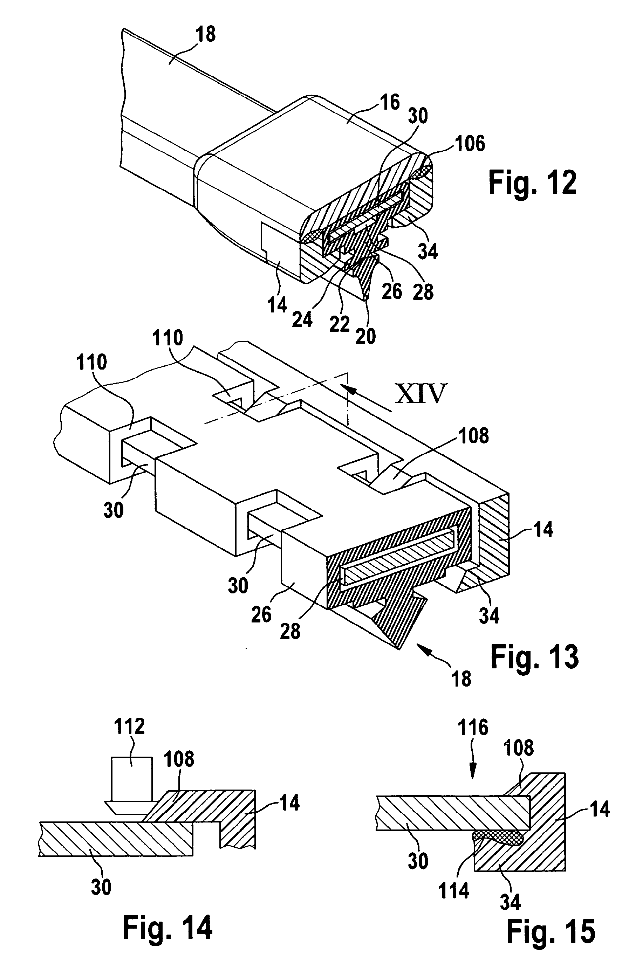

Bei dem Ausführungsbeispiel nach Fig. 12 bis Fig. 15 entfallen die Nuten 36, 96 und die Federteile 52, 78. Stattdessen stoßen die dem Adapterteil 16, 60 gegenüberliegenden Kanten der Klauenelemente 14, 58 stumpf an das Adapterteil 16, 60 und werden dort durch Ultraschallschweißen mit dem Adapterteil 16, 60 verbunden. Die Schmelzzone ist in Fig. 12 mit 106 gekennzeichnet.

In Fig. 13 ist nur die Wischleiste 18 mit einem Klauenelement 14 sowie dem aus einer Federschiene bestehenden Tragelement 30 zu sehen. Die Kopfleiste 26 weist im Bereich der Klauenelemente 14 seitliche Aussparungen 110 auf, die bis in den zentralen Längskanal 28 reichen. Durch diese Aussparungen 110 greifen nach innen gerichtete Nasen 108 der Klauenelemente 14, wobei die Nasen 108 auf der Oberseite des Tragelements 30 anliegen, sodass dieses zwischen den Nasen 108 einerseits und zwischen dem Schenkel 34 des Klauenelements 14 andererseits gehalten wird. Die Nasen 108 werden mittels eines Schweißwerkzeugs 112, einer Ultraschallsonde, an dem Tragelement 30 in Richtung 116 fest geschweißt. Außerdem ist an den den Nasen 108 gegenüberliegenden Stellen des Schenkels 34 des Klauenelements 14 das Klauenelement 14 mit dem Tragelement 30 durch Ultraschallschweißen verbunden. Die Schmelzzone ist durch 114 gekennzeichnet. Somit ist das Anschlusselement 12 bei der Ausführung nach Fig. 12 bis Fig. 15 eindeutig gegenüber dem Tragelement 30 in seiner Lage fixiert.

## Patentansprüche

1. Anschlusselement (12) zum gelenkigen Verbinden eines Wischblatts (10, 56) mit einem Wischarm, das zwei Klauenelemente (14, 58) und ein Adapterteil (16, 60) besitzt, wobei die Klauenelemente (14, 58) jeweils ein Tragelement (30) mit mindestens einer flachen, vorgebogenen Federschiene von unten und von den Längsseiten halten, während das Adapterteil (16, 60) die Klauenelemente (14, 58) oben überbrückt und von den Längsseiten zusammenhält, **dadurch gekennzeichnet, dass** die Klauenelemente (14, 58) L-förmige Querschnittprofile haben, von denen die einen Schenkel (34, 76) nach innen gerichtet sind und das Tragelement (30) untergreifen, während die anderen Schenkel Seitenwände (32, 74) bilden, die an ihren dem Adapterteil (16, 60) zugewandten Rändern mit dem Adapterteil (16, 60) durch eine Nut-Federverbindung (36, 52; 96, 78) verbunden und durch Klippverbindungen (40, 54; 82, 94) gesichert sind.

2. Anschlusselement (12) nach Anspruch 1, **dadurch gekennzeichnet, dass** die Seitenwand (32) des Klauenelements (14) an seinen dem Adapterteil (16) zugewandten Stirnflächen eine im Wesentlichen in Längsrichtung verlaufende Nut (36) aufweist, in die ein Federteil (52) des Adapterteils (16) passt, oder umgekehrt.

3. Anschlusselement (12) nach Anspruch 2, **dadurch gekennzeichnet, dass** das Adapterteil (16) in seinen Seitenwänden (44) Aussparungen (48) aufweist, in die im Bereich eines Lagerelements (46) Vorsprünge (50) des Adapterteils (16) ragen, die in entsprechende Aussparungen (38) der Klauenelemente (14) passen.

4. Anschlusselement (12) nach einem der Ansprüche 2 bis 3, **dadurch gekennzeichnet, dass** an den vorderen und hinteren Stirnkanten der Seitenwände (32) der Klauenelemente (14) im unteren Bereich Rastvertiefungen (40) vorgesehen sind, in die entsprechende Rasthaken (54) des Adapterteils (16) einrasten.

5. Anschlusselement (12) nach einem der Ansprüche 2 bis 4, **dadurch gekennzeichnet, dass** die Außenseiten der Seitenwände (32) der Klauenelemente (14) mit den Außenseiten der Seitenwände (44) des Adapterteils (16) bündig abschließen.

6. Anschlusselement (12) nach Anspruch 1, **dadurch gekennzeichnet, dass** das Adapterteil (60) als Kappe ausgebildet ist, die mit ihren Seitenwänden (84) die Seitenwände (74) der Klauenelemente (58) außen überdeckt, wobei Federteile (78) der Klauenelemente (58) an den dem Adapterteil (60) zugewandten Stirnflächen der Seitenwände (74) in innen liegende Nuten (96) des Adapterteils (60) passen, oder umgekehrt.

7. Anschlusselement (12) nach Anspruch 6, **dadurch gekennzeichnet, dass** die Klauenelemente (58) in Längsrichtung zu beiden Seiten ihrer Seitenwände (74) Verlängerungen (80) besitzen, die an ihrer unteren Kante Aussparungen (82) aufweisen, in die Rasthaken (94) einrasten, die im Inneren am Adapterteil (60) vorgesehen sind.

8. Anschlusselement (12) nach Anspruch 6 oder 7, **dadurch gekennzeichnet, dass** die Verlängerungen (80) gegenüber den Außenseiten der Seitenwände (74) nach innen zurückspringen.

9. Anschlusselement (12) nach einem der vorhergehenden Ansprüche, **dadurch gekennzeichnet, dass** die Schenkel (32, 34; 74, 76) der Klauenelemente (14, 58) an ihren Innenseiten Nischen (104) aufweisen, in die eine Klammer (102) eingreift, die das Tragelement (30) fest umfasst.

10. Wischblatt (10) **gekennzeichnet durch** die Verwendung eines Anschlusselements nach einem der vorhergehenden Ansprüche.

11. Wischblatt (10) zur Verwendung mit einem Anschlusselement (12) zum gelenkigen Verbinden des Wischblatts (10, 56) mit einem Wischarm, das zwei Klauenelemente (14, 58) und ein Adapterteil (16, 60) besitzt, wobei die Klauenelemente (14, 58) ein Tragelement (30) mit mindestens einer flachen, vorgebogenen Federschiene von unten und von den Längsseiten halten, während das Adapterteil (16, 60) die Klauenelemente (14, 58) oben überbrückt und von den Längsseiten zusammenhält, **dadurch gekennzeichnet, dass** die Klauenelemente (14, 58) L-förmige Querschnittprofile haben, von denen die einen Schenkel (34, 76) nach innen gerichtet sind und das Tragelement (30) untergreifen, während die anderen Schenkel Seitenwände (32, 74) bilden, die an ihren dem Adapterteil (16, 60) zugewandten Rändern mit dem Adapterteil (16, 60) durch eine Nut-Federverbindung (36, 52; 96, 78) verbunden und durch Klippverbindungen (40, 54; 82, 94) gesichert sind, wobei das Wischblatt (10) eine Wischleiste (18, 62) mit einem zentralen Längskanal (28) zur Aufnahme des Tragelements (30) in Form einer einzigen Federschiene besitzt.

12. Anschlusselement (12) zum gelenkigen Verbinden eines Wischblatts (10, 56) mit einem Wischarm, das zwei Klauenelemente (14, 58) und ein Adapterteil (16, 60) besitzt, wobei die Klauenelemente (14, 58) jeweils ein Tragelement (30) mit mindestens einer flachen, vorgebogenen Federschiene von unten und von den Längsseiten halten, während das Adapterteil (16, 60) die Klauenelemente (14, 58) oben überbrückt und von den Längsseiten zusammen-hält, **dadurch gekennzeichnet, dass** die Klauenelemente (14, 58) L-förmige Querschnittprofile haben, von denen die einen Schenkel (34, 76) nach innen gerichtet sind und das Tragelement (30) untergreifen, während die anderen Schenkel Seitenwände (32, 74) bilden, die an ihren dem Adapterteil (16, 60) zugewandten Rändern an dem Adapterteil (16, 60) anstoßen und mit diesem durch Ultraschallschweißen verbunden sind.

13. Anschlusselement (12) nach Anspruch 12, **dadurch gekennzeichnet, dass** die Klauenelemente (14, 58) mit dem Tragelement (30) durch Ultraschallschweißen verbunden sind.

14. Anschlusselement (12) zum gelenkigen Verbinden eines Wischblatts (10, 56) mit einem Wischarm, das zwei Klauenelemente (14, 58) und ein Adapterteil (16, 60) besitzt, wobei die Klauenelemente (14, 58) ein Tragelement (30) mit mindestens einer flachen, vorgebogenen Federschiene von unten und von den Längsseiten halten, während das Adapterteil (16, 60) die Klauenelemente (14, 58) oben überbrückt und von den Längsseiten zusammenhält, **dadurch gekennzeichnet, dass** die Klauenelemente (14, 58) L-förmige Querschnittprofile haben, von denen die einen Schenkel (34, 76) nach innen gerichtet sind und das Tragelement (30) untergreifen, während die anderen Schenkel Seitenwände (32, 74) bilden, die an ihren dem Adapterteil (16, 60) zugewandten Rändern an dem Adapterteil (16, 60) anstoßen und mit diesem durch Ultraschallschweißen verbunden sind, wobei die Klauenelemente (14, 58) mit dem Tragelement (30) durch Ultraschallschweißen verbunden sind und das Tragelement (30) eine einzige Federschiene ist, die in einem zentralen Längskanal (28) einer Kopfleiste (26) des Wischblatts (10, 56) untergebracht ist, wobei im Bereich der Klauenelemente (14, 58) seitliche Aussparungen (110) vorgesehen sind, durch die an den Klauenelementen (14, 58) nach innen angeformte Nasen (108) greifen, und die Federschiene (30) zwischen den Nasen (108) einerseits und den Schenkeln (34, 76) andererseits gehalten und mit den Nasen (108) durch Ultraschallschweißen verbunden sind.

15. Anschlusselement (12) nach Anspruch 14, **dadurch gekennzeichnet, dass** die Schenkel (34, 76) an Stellen, die den Nasen (108) gegenüberliegen, mit der Federschiene (30) durch Ultraschallschweißen verbunden sind.

## Claims

1. Connecting element (12) for the articulated connection of a wiper blade (10, 56) to a wiper arm, said connecting element having two claw elements (14, 58) and an adapter part (16, 60), wherein the claw elements (14, 58) each hold a supporting element (30) having at least one flat, pre-bent spring rail from below and from the longitudinal sides while the adapter part (16, 60) spans the claw elements (14, 58) at the top and holds them together from the longitudinal sides, **characterized in that** the claw elements (14, 58) have L-shaped cross-sectional profiles, from which the one limbs (34, 76) are directed inwards and engage under the supporting element (30) while the other limbs form side walls (32, 74) which, at the edges thereof facing the adapter part (16, 60), are connected to the adapter part (16, 60) by a tongue and groove connection (36, 52; 96, 78) and are secured by clip connections (40, 54; 82, 94).

2. Connecting element (12) according to Claim 1, **characterized in that** the side wall (32) of the claw element (14) has, on the end surfaces thereof which face the adapter part (16), a groove (36) which runs substantially in the longitudinal direction and into which a tongue part (52) of the adapter part (16) fits, or vice versa.

3. Connecting element (12) according to Claim 2, **characterized in that** the side walls (44) of the adapter part (16) have recesses (48) into which projections (50) of the adapter part (16) protrude in the region of a bearing element (46), said projections fitting into corresponding recesses (38) of the claw elements (14).

4. Connecting element (12) according to either of Claims 2 and 3, **characterized in that** latching depressions (40) into which corresponding latching hooks (54) of the adapter part (16) latch are provided in the lower region on the front and rear end edges of the side walls (32) of the claw elements (14).

5. Connecting element (12) according to one of Claims 2 to 4, **characterized in that** the outer sides of the side walls (32) of the claw elements (14) end flush with the outer sides of the side walls (44) of the adapter part (16).

6. Connecting element (12) according to Claim 1, **characterized in that** the adapter part (60) is designed as a cap which, by means of the side walls (84) thereof, covers the side walls (74) of the claw elements (58) on the outside, wherein tongue parts (78) of the claw elements (58) on those end surfaces of the side walls (74) which face the adapter part (60) fit into internal grooves (96) of the adapter part (60), or vice versa.

7. Connecting element (12) according to Claim 6, **characterized in that** the claw elements (58) have extensions (80) in the longitudinal direction on both sides of their side walls (74), said extensions having, at the lower edge thereof, recesses (82) into which latching hooks (94) which are provided in the interior on the adapter part (60) latch.

8. Connecting element (12) according to Claim 6 or 7, **characterized in that** the extensions (80) spring back inwards in relation to the outer sides of the side walls (74).

9. Connecting element (12) according to one of the preceding claims, **characterized in that** the inner sides of the limbs (32, 34; 74, 76) of the claw elements (14, 58) have niches (104) in which a clamp (102) which fixedly surrounds the supporting element (30) engages.

10. Wiper blade (10) **characterized by** the use of a connecting element according to one of the preceding claims.

11. Wiper blade (10) for use with a connecting element (12) for the articulated connection of the wiper blade (10, 56) to a wiper arm, the connecting element having two claw elements (14, 58) and an adapter part (16, 60), wherein the claw elements (14, 58) hold a supporting element (30) having at least one flat, pre-bent spring rail from below and from the longitudinal sides while the adapter part (16, 60) spans the claw elements (14, 58) at the top and holds the latter together from the longitudinal sides, **characterized in that** the claw elements (14, 58) have L-shaped cross-sectional profiles, from which the one limbs (34, 76) are directed inwards and engage under the supporting element (30) while the other limbs form side walls (32, 74) which, at the edges thereof which face the adapter part (16, 60), are connected to the adapter part (16, 60) by a tongue and groove connection (36, 52; 96, 78) and are secured by clip connections (40, 54; 82, 94), wherein the wiper blade (10) has a wiper strip (18, 62) with a central longitudinal channel (28) for receiving the supporting element (30) in the form of a single spring rail.

12. Connecting element (12) for the articulated connection of a wiper blade (10, 56) to a wiper arm, said connecting element having two claw elements (14, 58) and an adapter part (16, 60), wherein the claw elements (14, 58) each hold a supporting element (30) having at least one flat, pre-bent spring rail from below and from the longitudinal sides while the adapter part (16, 60) spans the claw elements (14, 58) at the top and holds them together from the longitudinal sides, **characterized in that** the claw elements (14, 58) have L-shaped cross-sectional profiles, from which the one limbs (34, 76) are directed inwards and engage under the supporting element (30) while the other limbs form side walls (32, 74) which, at the edges thereof facing the adapter part (16, 60), abut against the adapter part (16, 60) and are connected to the latter by ultrasonic welding.

13. Connecting element (12) according to Claim 12, **characterized in that** the claw elements (14, 58) are connected to the supporting element (30) by ultrasonic welding.

14. Connecting element (12) for the articulated connection of a wiper blade (10, 56) to a wiper arm, the connecting element having two claw elements (14, 58) and an adapter part (16, 60), wherein the claw elements (14, 58) hold a supporting element (30) having at least one flat, pre-bent spring rail from below and from the longitudinal sides while the adapter part (16, 60) spans the claw elements (14, 58) at the top and holds the latter together from the longitudinal sides, **characterized in that** the claw elements (14, 58) have L-shaped cross-sectional profiles, from which the one limbs (34, 76) are directed inwards and engage under the supporting element (30) while the other limbs form side walls (32, 74) which, at the edges thereof which face the adapter part (16, 60), abut against the adapter part (16, 60) and are connected to the latter by ultrasonic welding, wherein the claw elements (14, 58) are connected to the supporting element (30) by ultrasonic welding, and the supporting element (30) is a single spring rail which is accommodated in a central longitudinal channel (28) of a head strip (26) of the wiper blade (10, 56), wherein lateral recesses (110), through which lugs (108) which are integrally formed to the inside on the claw elements (14, 58), are provided in the region of the claw elements (14, 58), and the spring rail (30) is held between the lugs (108) and the limbs (34, 76) and is connected to the lugs (108) by ultrasonic welding.

15. Connecting element (12) according to Claim 14, **characterized in that** the limbs (34, 76) are connected to the spring rail (30) at points opposite the lugs (108) by ultrasonic welding.

## Revendications

1. Élément de raccordement (12) permettant de relier de manière articulée un balai d'essuie-glace (10, 56) à un bras d'essuie-glace, lequel élément de raccordement possède deux éléments de griffe (14, 58) et une partie adaptatrice (16, 60), les éléments de griffe (14, 58) retenant respectivement un élément de support (30) par le bas et par les côtés latéraux à l'aide d'au moins un rail élastique plat précintré, tandis que la partie adaptatrice (16, 60) enjambe par le haut les éléments de griffe (14, 58) et les retient ensemble par les côtés latéraux, **caractérisé en ce que** les éléments de griffe (14, 58) ont des profils en forme de L en section transversale, dans lesquels certaines branches (34, 76) sont orientées vers l'intérieur et viennent en prise par le dessous avec l'élément de support (30) tandis que les autres branches forment des parois latérales (32, 74) qui sont reliées, au niveau de leurs bords tournés vers la partie adaptatrice (16, 60), à la partie adaptatrice (16, 60) par une liaison à rainure et languette (36, 52 ; 96, 78) et sont bloquées par des liaisons par clipsage (40, 54 ; 82, 94).

2. Élément de raccordement (12) selon la revendication 1, **caractérisé en ce que** la paroi latérale (32) de l'élément de griffe (14) comprend, sur sa face frontale tournée vers la partie adaptatrice (16), une rainure (36) s'étendant essentiellement dans la direction longitudinale, dans laquelle rainure s'adapte une partie de languette (52) de la partie adaptatrice (16), ou inversement.

3. Élément de raccordement (12) selon la revendication 2, **caractérisé en ce que** la partie adaptatrice (16) comprend des évidements (48) dans ses parois latérales (44), dans lesquels évidements font saillie, dans la région d'un élément de palier (46), des saillies (50) de la partie adaptatrice (16) qui s'adaptent dans des évidements correspondants (38) des éléments de griffe (14).

4. Élément de raccordement (12) selon la revendication 2 ou 3, **caractérisé en ce que** des renfoncements d'encliquetage (40) sont prévus sur les arêtes frontales avant et arrière des parois latérales (32) des éléments de griffe (14), dans la région inférieure, dans lesquels renfoncements d'encliquetage s'encliquètent des crochets d'encliquetage correspondants (54) de la partie adaptatrice (16).

5. Élément de raccordement (12) selon l'une quelconque des revendications 2 à 4, **caractérisé en ce que** les côtés extérieurs des parois latérales (32) des éléments de griffe (14) se terminent en affleurement avec les côtés extérieurs des parois latérales (44) de la partie adaptatrice (16).

6. Élément de raccordement (12) selon la revendication 1, **caractérisé en ce que** la partie adaptatrice (60) est réalisée sous forme de capuchon qui recouvre par ses parois latérales (84), à l'extérieur, les parois latérales (74) des éléments de griffe (58), des parties de languette (78) des éléments de griffe (58) s'adaptant, au niveau des faces frontales des parois latérales (74) tournées vers la partie adaptatrice (60), dans des rainures (96), situées à l'intérieur, de la partie adaptatrice (60), ou inversement.

7. Élément de raccordement (12) selon la revendication 6, **caractérisé en ce que** les éléments de griffe (58) possèdent dans la direction longitudinale, des deux côtés de leurs parois latérales (74), des prolongements (80) qui comprennent des évidements (82) sur leur arête inférieure, dans lesquels évidements s'encliquètent des crochets d'encliquetage (94) qui sont prévus à l'intérieur sur la partie adaptatrice (60).

8. Élément de raccordement (12) selon la revendication 6 ou 7, **caractérisé en ce que** les prolongements (80) sont en retrait vers l'intérieur par rapport aux côtés extérieurs des parois latérales (74).

9. Élément de raccordement (12) selon l'une quelconque des revendications précédentes, **caractérisé en ce que** les branches (32, 34 ; 74, 76) des éléments de griffe (14, 58) comprennent sur leurs côtés intérieurs des enfoncements (104) dans lesquels vient en prise une agrafe (102) qui enserre solidement l'élément de support (30).

10. Balai d'essuie-glace (10), **caractérisé par** l'utilisation d'un élément de raccordement selon l'une quelconque des revendications précédentes.

11. Balai d'essuie-glace (10) destiné à être utilisé avec un élément de raccordement (12) permettant de relier de manière articulée le balai d'essuie-glace (10, 56) à un bras d'essuie-glace, lequel élément de raccordement possède deux éléments de griffe (14, 58) et une partie adaptatrice (16, 60), les éléments de griffe (14, 58) retenant un élément de support (30) par le bas et par les côtés latéraux à l'aide d'au moins un rail élastique plat précintré, tandis que la partie adaptatrice (16, 60) enjambe par le haut les éléments de griffe (14, 58) et les retient ensemble par les côtés latéraux, **caractérisé en ce que** les éléments de griffe (14, 58) ont des profils en forme de L en section transversale, dans lesquels certaines branches (34, 76) sont orientées vers l'intérieur et viennent en prise par le dessous avec l'élément de support (30) tandis que les autres branches forment des parois latérales (32, 74) qui sont reliées, au niveau de leurs bords tournés vers la partie adaptatrice (16, 60), à la partie adaptatrice (16, 60) par une liaison à rainure et languette (36, 52 ; 96, 78) et sont bloquées par des liaisons par clipsage (40, 54 ; 82, 94), le balai d'essuie-glace (10) possédant une raclette de balai d'essuie-glace (18, 62) dotée d'un canal longitudinal central (28) pour recevoir l'élément de support (30) sous forme de rail élastique unique.

12. Élément de raccordement (12) permettant de relier de manière articulée un balai d'essuie-glace (10, 56) à un bras d'essuie-glace, lequel élément de raccordement possède deux éléments de griffe (14, 58) et une partie adaptatrice (16, 60), les éléments de griffe (14, 58) retenant respectivement un élément de support (30) par le bas et par les côtés latéraux à l'aide d'au moins un rail élastique plat précintré, tandis que la partie adaptatrice (16, 60) enjambe par le haut les éléments de griffe (14, 58) et les retient ensemble par les côtés latéraux, **caractérisé en ce que** les éléments de griffe (14, 58) ont des profils en forme de L en section transversale, dans lesquels certaines branches (34, 76) sont orientées vers l'intérieur et viennent en prise par le dessous avec l'élément de support (30) tandis que les autres branches forment des parois latérales (32, 74) qui sont contiguës, au niveau de leurs bords tournés vers la partie adaptatrice (16, 60), à la partie adaptatrice (16, 60) et sont reliées à cette dernière par soudage par ultrasons.

13. Élément de raccordement (12) selon la revendication 12, **caractérisé en ce que** les éléments de griffe (14, 58) sont reliés à l'élément de support (30) par soudage par ultrasons.

14. Élément de raccordement (12) permettant de relier de manière articulée un balai d'essuie-glace (10, 56) à un bras d'essuie-glace, lequel élément de raccordement possède deux éléments de griffe (14, 58) et une partie adaptatrice (16, 60), les éléments de griffe (14, 58) retenant un élément de support (30) par le bas et par les côtés latéraux à l'aide d'au moins un rail élastique plat précintré, tandis que la partie adaptatrice (16, 60) enjambe par le haut les éléments de griffe (14, 58) et les retient ensemble par les côtés latéraux, **caractérisé en ce que** les éléments de griffe (14, 58) ont des profils en forme de L en section transversale, dans lesquels certaines branches (34, 76) sont orientées vers l'intérieur et viennent en prise par le dessous avec l'élément de support (30) tandis que les autres branches forment des parois latérales (32, 74) qui sont contiguës, au niveau de leurs bords tournés vers la partie adaptatrice (16, 60), à la partie adaptatrice (16, 60) et sont reliées à cette dernière par soudage par ultrasons, les éléments de griffe (14, 58) étant reliés à l'élément de support (30) par soudage par ultrasons et l'élément de support (30) étant un rail élastique unique qui est introduit dans un canal longitudinal central (28) d'une raclette de tête (26) du balai d'essuie-glace (10, 56), des évidements latéraux (110) étant prévus dans la région des éléments de griffe (14, 58), à travers lesquels évidements viennent en prise des ergots (108) formés vers l'intérieur sur les éléments de griffe (14, 58), et le rail élastique (30) étant retenu entre les ergots (108) d'une part et les branches (34, 76) d'autre part et étant relié aux ergots (108) par soudage par ultrasons.

15. Élément de raccordement (12) selon la revendication 14, **caractérisé en ce que** les branches (34, 76) sont reliées au rail élastique (30) par soudage par ultrasons en des emplacements qui sont en regard des ergots (108).
